# EUROPEAN PATENT APPLICATION

(11) **EP 4 741 024 A1**
(43) Date of publication of application: **13.05.2026**
(21) Application number: 25213973.8
(22) Date of filing: 06.11.2025
(51) Int. Cl.: A62C 3/02, A62C 25/00, A62C 27/00, B65D 88/12, B65D 90/52, F41B 9/00

(54) **SYSTEMS, DEVICES, AND METHODS FOR A WATER CANNON**

(30) Priority: 08.11.2024 CA 3253004; 12.11.2024 US 202418945366
(71) Applicant: White River Contracting Ltd, Vanderhoof, British Columbia V0J 3A0 (CA)
(72) Inventor: FAWCETT, Ronald Ross, Vanderhoof, V0J 3A0 (CA)
(74) Representative: HGF

(57) **Abstract**

Disclosed herein is a cannon system (400) and method, the system (400) comprising: a tank (200) comprising at least one baffle (210, 220a, 220b, 220c, 220d) extending from an interior surface of the tank (200); at least one pump each comprising bearings supporting a shaft of the pump, the at least one pump configured to pump fluid into the tank (200) from a fluid source and configured to disperse fluid from the tank (200); and a suction system (300) comprising at least one float (320) positioned above a suction screen (310), the at least one float (320) configured to hold the suction screen (310) below an intake fluid level of the fluid source, the suction screen (310) in fluid connection with the at least one pump.

## Description

### FIELD

The present disclosure relates to the field of apparatuses for firefighting and, in particular, to water cannons.

### BACKGROUND

Forest fires can be a deadly threat to people, animals, vegetation, and the infrastructure. Firefighting is manual and dangerous. Firefighting personnel are limited by physical exhaustion and the ability to access difficult or remote terrain affected by fires. Furthermore, firefighting is time-consuming and typically endangers the safety of the many firefighting personnel in ground crews. Firefighting vehicles can carry water tanks to help combat fires away from accessible sources of water, but these water tanks are depleted quickly and can take a long time to fill, necessitating multiple trips to the water source and reducing the speed at which fires can be controlled and mitigated. Large firefighting crews are deployed on the ground, close to raging and potentially uncontrollable fires, with simple equipment such as hoses and water tanks with limited capacity and pumps that can only refill the tanks at a slow rate. A lack of fine-tuned control of the firefighting vehicle can lead to wasted water and further delayed mitigation of the many risks caused by fires. Furthermore, firefighting efforts are limited by the visibility in the region being consumed by fire. For example, firefighting efforts are often limited to natural daylight hours.

Existing strategies include use of standard firetrucks, fire pumps, robotic water cannons, and firefighting drones. However, these strategies do not adequately solve all of the foregoing difficulties with fighting fire.

For example, while Chinese patent application no. 111317940 for a Forest Automatic Fire Extinguishing Method, Device, Equipment, and Storage Medium provides an unmanned aerial vehicle to detect and monitor a forest fire and place fire extinguishants to the position of the fire, the method provided still relies on then notifying a command centre to distribute firefighting ground crews.

As another example, U.S. patent no. 11986690 for Fire Fighting Systems and Methods provides a standard fire truck with an improved fluid delivery system that enables management of the flow rate and pressure generated by a pump for delivering the flow rate, but does not address any of the foregoing challenges.

This background information is provided for the purpose of making known information believed by the applicant to be of possible relevance to the present disclosure. No admission is necessarily intended, nor should be construed, that any of the preceding information constitutes prior art against the present disclosure.

### SUMMARY

In accordance with an aspect, there is provided a cannon system, including: a tank comprising at least one baffle extending from an interior surface of the tank; at least one pump each comprising bearings supporting a shaft of the pump, the at least one pump configured to pump fluid into the tank from a fluid source and configured to disperse fluid from the tank; and a suction system comprising at least one float positioned above a suction screen, the at least one float configured to hold the suction screen below an intake fluid level of the fluid source, the suction screen in fluid connection with the at least one pump.

In some embodiments, the at least one baffle includes a longitudinal baffle extending along a longitudinal axis of the tank and at least two side baffles each extending from the longitudinal baffle towards a side surface of the interior surface of the tank.

In some embodiments, the longitudinal baffle extends from a bottom surface of the interior surface of the tank.

In some embodiments, the at least two side baffles include at least two sets of V-shaped baffles.

In some embodiments, the suction screen comprises a length selected to reduce cavitation in fluid from the fluid source.

In some embodiments, the suction screen is about two feet long.

In some embodiments, the at least one float is configured to hold the suction screen about six inches below an intake fluid level of the fluid source.

In some embodiments, the fluid cannon further includes a configurable throttle valve through which the fluid dispersed from the tank is dispersed.

In some embodiments, the at least one pump includes at least one hydraulic pump.

In some embodiments, the at least one pump is connectible to at least one cannon.

In some embodiments, the at least one pump is connectible to at least one hose.

In some embodiments, the at least one pump is configured to pump fluid into the tank under pressurized conditions.

In some embodiments, the at least one pump is configured to disperse fluid from the tank at a rate of about 628 gallons per minute.

In some embodiments, a skidder, includes the cannon system; a cab configured to house at least one control for the configurable throttle valve; and at least one camera configured to provide a video feed in the cab, the video feed covering a radius about the cab.

In accordance with an aspect, a method for providing a cannon includes: suctioning fluid at a depth beneath and near a surface of a fluid source; hydraulically pumping the fluid from the fluid source by providing axially rotatable support; retaining pumped fluid; impeding movement of the pumped fluid forward and backward and side to side while retained; and hydraulically dispersing retained pumped fluid.

In some embodiments, the method further includes pressurizing the hydraulic pumping of the fluid.

In some embodiments, the method further includes suctioning fluid across an about two feet screened distance.

In some embodiments, the method further comprises providing a video feed covering an about 340° radius.

In some embodiments, the method further comprises controlling a throttle pressure of the hydraulic dispersion of the retained pumped fluid.

### BRIEF DESCRIPTION OF THE DRAWINGS

These and other features will become more apparent in the following detailed description in which reference is made to the appended drawings.
FIG. 1A is a side view of a vehicle incorporating a cannon system, according to some embodiments;
FIG. 1B is a rear view of a vehicle incorporating a cannon system, according to some embodiments;
FIG. 1C is a rear view of a vehicle incorporating a cannon system, according to some embodiments;
FIG. 2 is an isometric view of a tank of a cannon system, according to some embodiments;
FIG. 3 is a top view of a tank of a cannon system, according to some embodiments;
FIG. 4 is a side view of a tank of a cannon system, according to some embodiments;
FIG. 5 is an end view of a tank of a cannon system, according to some embodiments;
FIG. 6 is an end view of a suction system of a cannon system, according to some embodiments;
FIG. 7 is a top view of a suction system of a cannon system, according to some embodiments;
FIG. 8 is a side view of a suction system of a cannon system, according to some embodiments;
FIG. 9 is a perspective view of a suction system of a cannon system, according to some embodiments;
FIG. 10 is a perspective view of a suction system of a cannon system, according to some embodiments;
FIG. 11 is a perspective view of a suction system of a cannon system, according to some embodiments; and
FIG. 12A is a front view of a pump adapter of an intake-output system, according to some embodiments;
FIG. 12B is a side view of a pump adapter of an intake-output system, according to some embodiments;
FIG. 12C is a back view of a pump adapter of an intake-output system, according to some embodiments;
FIG. 12D is an isometric view of a pump adapter of an intake-output system, according to some embodiments;
FIG. 13 is an isometric view of a tank, according to some embodiments;
FIG. 14 is a top view of a tank, according to some embodiments; and
FIG. 15 is a side cross-sectional view of a tank, according to some embodiments.

### DETAILED DESCRIPTION OF EMBODIMENTS

Disclosed herein is a water cannon system that can be included in an industrial vehicle such as a logging skidder, to provide improved firefighting capabilities, with a reduced firefighting crew, increased water dispersion range, decreased pumping time, more efficient or improved suctioning of water from a water source (e.g., reduced cavitation and reduced likelihood of hose collapse under pressurized filling), more efficient filling of a tank for retaining the water, increased safety of operation, 24 hour per day service window not limited to daylight hours, and/or improved movability and traction capability despite carrying large volumes of water in the tank, according to various embodiments.

In various embodiments, these advantages are provided by adapting the tank with baffles extending from an interior surface of the tank to reduce sloshing of water in backward and forward directions, as well as side to side directions; adapting pump(s) with bearings to facilitate an increased rotational speed of the shaft(s) of the pump(s) to increase pumping speed (e.g., of water into the tank and/or of water dispersed through a water cannon); operating the pump(s) with a hydraulic system rather than a gas-powered system; and/or providing an improved suction system for drawing water from a water source into the tank whereby a suction screen is floated at a depth near the surface of the water source and the suction screen is elongated to reduce intake of contaminants and provide a greater volume of water for intake thereby reducing air intake and cavitation and collapse of the hose or piping. The improved suction system can provide an increased speed of suctioning, in some embodiments.

As used herein, the term "water" refers to water or, in some embodiments, another liquid, such as a flame retardant or a mixture.

As used herein, the term "tank" refers to a tank or, in some embodiments, another device capable of retaining water.

As used herein, the term "about" refers to an approximately +/-10% variation from a given value. It is to be understood that such a variation is always included in any given value provided herein, whether or not it is specifically referred to.

As used herein, the term "fluid" refers to liquid, not gas.

Unless defined otherwise, all technical and scientific terms used herein have the same meaning as commonly understood by one of ordinary skill in the art to which this disclosure belongs.

### Vehicle Incorporating Cannon System

In some embodiments, there is provided a vehicle 100 (e.g., a skidder) including a cannon system 400, a cab 130 configured to house at least one control for a cannon 150 (e.g., a control for a configurable throttle valve of a pump); and at least one camera configured to provide a video feed in cab 130, the video feed covering a radius about the cab 130. In some embodiments, cab 130 is positioned at a front end of vehicle 100 and cannon system 400 is positioned at a rear end of vehicle 100, where cab 130 and cannon system 400 are each mounted on a frame supported by wheels.

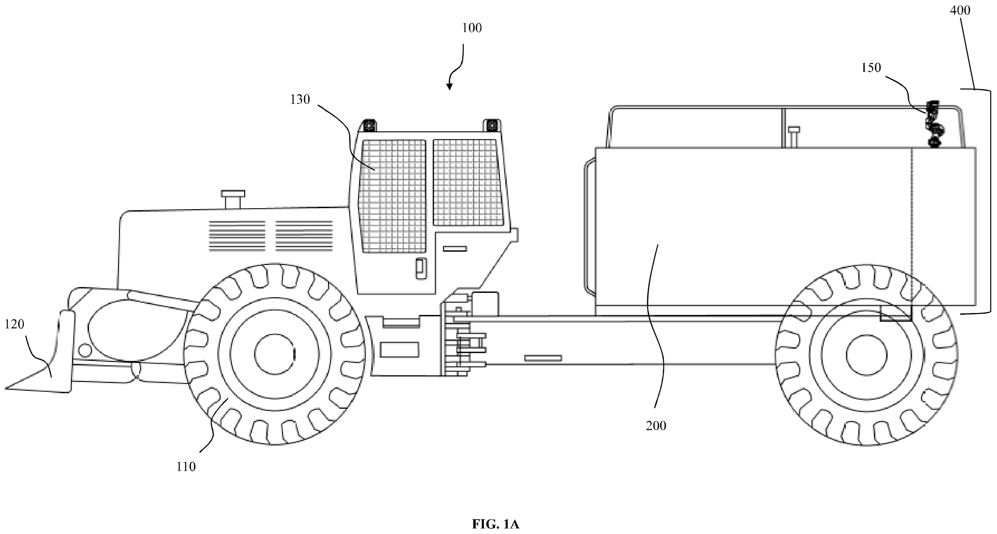

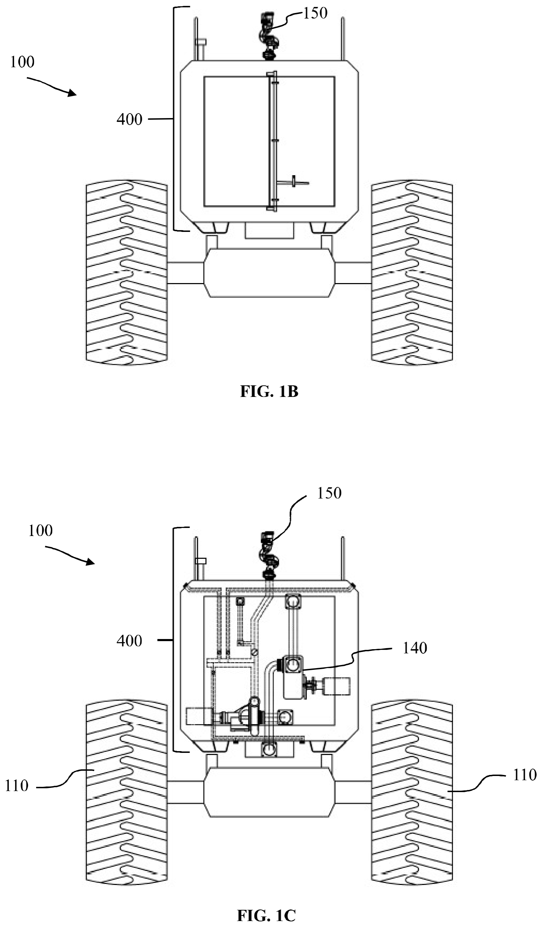

FIG. 1A and 1B show an example vehicle 100 incorporating an example cannon system 400, according to some embodiments. Vehicle 100 can be a logging skidder, for example. Vehicle 100 includes a frame onto which cannon system 400 is fitted. A logging skidder can be a heavy-duty industrial machine that is typically used for dragging trees to the roadside. The undercarriage is durable and tough with very large tires that give the skidder the ability to move quickly through the brush, over steep terrain and with a blade on the front, capable of creating its own access through the forest. Vehicle 100 can be further adapted, such as to reinforce vehicle 100 and extend the frame to support tank 200, which can be large and comprised of steel or other suitable material(s).

In some embodiments, vehicle 100 includes a cab 130 configured to accommodate an operator and various control(s). Cab 130 can include control(s), such as for controlling a throttle valve, throttle, throttle pressure, and/or amount of fluid dispersed by cannon system 400; controlling a direction and/or type of dispersion (e.g., fan spray, jet spray, etc.) of fluid dispersed by cannon system 400; driving vehicle 100; controlling movement of a blade 120 or other apparatus attached to vehicle 100; controlling camera view(s); controlling light(s) and/or illumination surrounding vehicle 100; and/or other control(s) or configuration(s). Cab 130 advantageously allows vehicle 100 to replace an initial attack crew of, for example, 10-20 people, with only a single operator.

In some embodiments, cab 130 is configured to include one or more camera screens showing image(s) and/or video from one or more cameras mounted on vehicle 100. For example, cameras can be positioned on or surrounding vehicle 100 to provide different views around vehicle 100. The views can provide a 360° or 340° angle view about vehicle 100 or other angles of viewing. The views can be provided on a single or multiple (e.g., four) screens viewable from inside cab 130. Camera positioning can be configured according to the view(s) desired, for example. For example, one camera can be mounted on cannon 150 and three positioned to capture image around vehicle 100. In some embodiments, the camera(s) allow a vehicle 100 to be used more effectively and with greater accuracy, allowing more control over the choice of dispersion direction and type, as well as movement of vehicle 100.

In some embodiments, vehicle 100 includes one or more lights positioned on or around vehicle 100 to provide illumination around vehicle 100. The lights can provide daylight conditions in the dark, allowing vehicle 100 to operate at night (e.g., 24 hours per day) when ground crews otherwise would not be able to. These lights can be positioned all around vehicle 100 to allow vehicle 100 to be operated safely at night.

In some embodiments, vehicle 100 is marked with identification information, such as a large identification number, on a top surface of vehicle, such as the outer roof of cab 130. This can facilitate visibility by helicopters, allowing for improved communication with the operator.

In some embodiments, vehicle 100 includes a blade 120. Blade 120 can be positioned at a front end of vehicle 100. Blade 120 can be 4.1 m wide or other dimension, for example, and can cover the width of the tires 110 of vehicle 100 to provide increased protection. Blade 120 can allow vehicle 100 access to deactivated areas ahead of road machinery and/or push down danger trees, fill in ditches, or otherwise increase the mobility and effectiveness of vehicle 100, according to some embodiments.

In some embodiments, vehicle 100 includes tires, such as four tires, that each do not require chains and provide traction. For example, in some embodiments, vehicle 100 can reach 55 km/hour on maintained roads. The tire type, dimension, and size can be selected to allow vehicle 100 to maneuver in difficult terrain.

### Cannon System

In some embodiments, vehicle 100 includes cannon system 400. In some embodiments, cannon system 400 includes a tank 200, at least one pump each including bearings supporting a shaft of the pump, the at least one pump configured to pump fluid into tank 200 from a fluid source and configured to disperse fluid from tank 200; and a suction system 300 including at least one float 320 positioned above a suction screen 310, the at least one float 320 configured to hold suction screen 310 below an intake fluid level of the fluid source, the suction screen 310 in fluid connection with the at least one pump. In some embodiments, tank 200 includes at least one baffle extending from an interior surface of tank 200.

In some embodiments, the bearings are high-speed bearings, such as bearings configured to support rotational movement of the shaft of a pump at 5000 RPM.

### Tank

In some embodiments, cannon system 400 includes tank 200. In some embodiments, tank 200 is configured to retain a fluid, such as water. Tank 200 can be sized and shaped to hold a desired amount of fluid. For example, tank can hold 8,325 L (2,200 gallons) in some embodiments. In some embodiments, tank 200 includes a reinforced shell. In some embodiments, tank 200 includes one or more baffles inside tank 200 designed to keep the retained fluid central so that vehicle 100 is stable and the weight from the fluid is kept equal on all tires to help maintain traction, even on steep terrain. In some embodiments, tank 200 is not a tank but is a different apparatus that permits retention of fluid. In some embodiments, tank 200 includes at least one baffle extending from an interior surface of the tank. The baffle(s) can help reduce sloshing of fluid in tank 200 and reduce instability of a vehicle 100 into which tank 200 is incorporated and maintain traction of vehicle 100 on all tires, according to embodiments.

In some embodiments, cannon system 400 can provide over 45 km of firefighting capability, which can far exceed the approximately 1 km of firefighting capability provided by existing systems, such as manual firefighting by an individual.

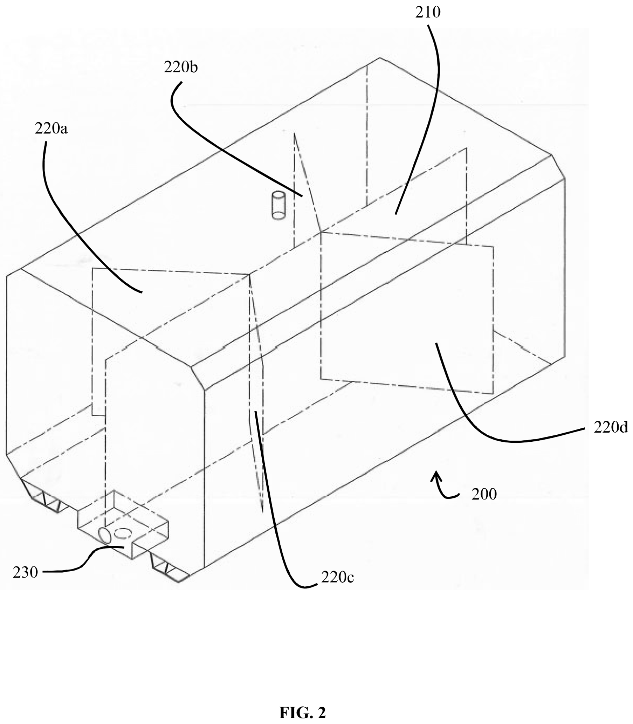

FIG. 2 shows an isometric view of an example tank 200, according to some embodiments. In various embodiments, tank 200 includes various numbers and configurations (e.g., shapes, design, orientation, position) of baffle(s). In some embodiments, tank 200 has at least one baffle.

In some embodiments, the at least one baffle includes a longitudinal baffle 210 extending along a longitudinal axis of tank 200 and at least two side baffles 220 each extending from longitudinal baffle 210 towards a side surface of the interior surface of tank 200.

In some embodiments, longitudinal baffle 210 is suspended in tank 200. For example, longitudinal baffle 210 is connected to the interior surface of tank 200 at a first end and/or at a second end, with no portion of longitudinal baffle 210 touching a bottom surface of the interior surface of tank 200 or a top surface of the interior surface of tank 200. This can allow for fluid in tank 200 to settle at the bottom of tank 200 so as allow vehicle 100 to be more stable on uneven terrain as the fluid will not be trapped in one portion of tank 200, according to some embodiments.

Alternatively, in some embodiments, longitudinal baffle 210 extends from a bottom surface of the interior surface of tank 200. In some embodiments, longitudinal baffle 210 extends from a top surface or other surface of the interior surface of tank 200. In some embodiments, a side baffle 220 can abut the side surface along its entire end or along one or more portions of its end. For example, a side baffle 220 can abut the side surface and also have one or more open portions at its end that do not abut the side surface. This can allow fluid flow through tank 200, for example.

In some embodiments, longitudinal baffle 210 extends from a bottom surface of the interior surface of tank 200. In some embodiments, longitudinal baffle 210 extends over a tray 230 such as shown in FIG. 2. In some embodiments, side baffles 220 attach to longitudinal baffle 210 and are suspended in tank 200 without touching any surface of the interior of tank 200. Each side baffle 220 can be three feet in length, for example. Similarly, in some embodiments, longitudinal baffle 210 can abut a surface (e.g., bottom, top) of an interior surface of tank 200 along an entire end of longitudinal baffle 210 (e.g., along a bottom end when attached to a bottom surface of tank) or along one or more portions of its end. For example, longitudinal baffle 210 can abut the interior surface (e.g., bottom interior surface or top interior surface) and also have one or more open portions at its end (e.g., bottom end or top end) that do not abut the interior surface (e.g., bottom interior surface or top interior surface). This can allow fluid flow through tank 200, for example.

In some embodiments, a baffle (e.g., longitudinal baffle 210 or side baffle 220) can abut an interior surface of tank 200 by being attached or attachable to the interior surface at that location. In some embodiments, a baffle can abut an interior surface of tank 200 without being attached at that location, but may be attached at a different location such as directly or indirectly. For example, a side baffle 220 can be attached to a portion along the length of longitudinal baffle 210 and extend towards a side interior surface of tank 200 without being attached directly to tank 200. In some embodiments, a baffle can be attached to tank 200 at a top and/or bottom end of the baffle. In various embodiments, various combinations of locations of attachment and/or configurations of attachment can be used.

In some embodiments, side baffles 220 are configured in V-shape(s) about a plane defined by longitudinal baffle 210, such as shown in FIG. 2. One or more pairs of baffles 220 can be used, each pair forming a V-shape. Opposing V-shaped pairs of baffles 220 can face away from each other, such as shown in FIG. 2 by side baffle 220a and side baffle 220c (forming a V-shaped pair of baffle 220) and side baffle 220b and side baffle 220d (forming a V-shaped pair of baffle 220). In some embodiments, opposing V-shaped pairs of baffles 220 can face toward each other.

In some embodiments, the design and configuration and number of baffles are selected to facilitate or improve control of movement of water in tank, such as reduction of sloshing. Side baffle(s) 220, such as V-shaped pairs of baffles 220, can help draw water in the tank to the middle, as well as reduce movement of water between front and back of the tank. Longitudinal baffle 210 can help reduce movement of water between side to side of the tank. In various embodiments, different baffle configurations and designs can be used to help control water retention in tank, such as movement of the water during movement of the cannon and/or during operation to facilitate pumping and/or filling and/or dispersion. Each baffle 220 can be six inches long, for example.

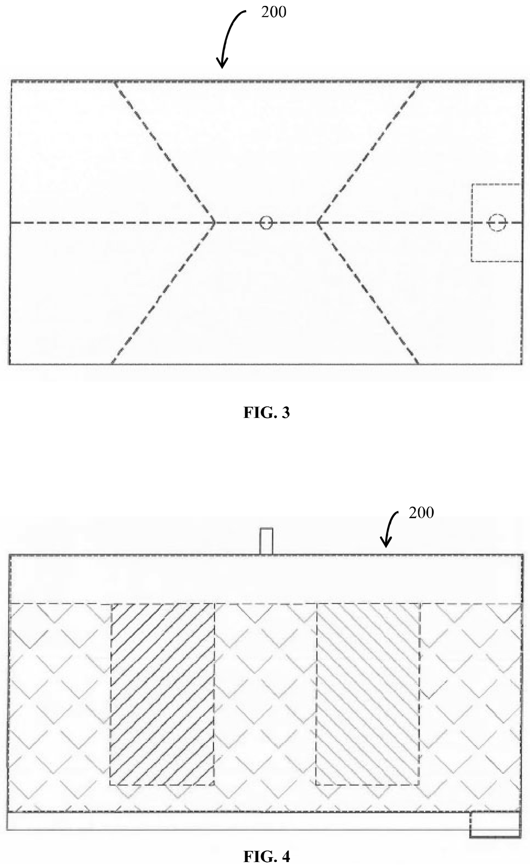

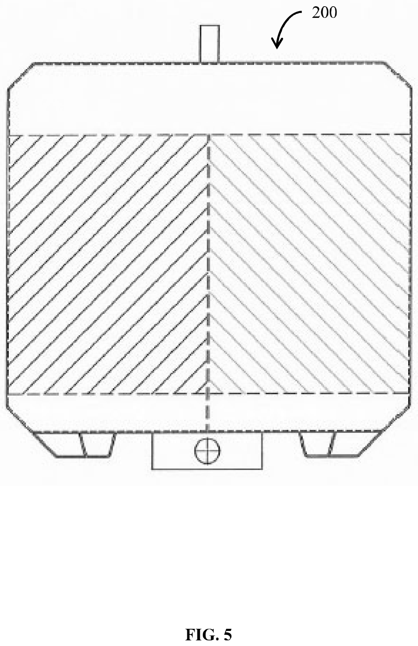

FIG. 3 shows a top view of an example tank 200, according to some embodiments. FIG. 4 shows a side view of an example tank 200, according to some embodiments. FIG. 5 shows an end view of an example tank 200, according to some embodiments. In some embodiments, tank 200 has a connector positioned at or near a centre of a top surface of tank 200, the connector configured to secure a cannon 150. In some embodiments, tank 200 has one or more extruding features at a bottom exterior surface of tank 200 sized, shaped, positioned, and/or dimensioned to facilitate engagement and/or attachment of tank 200 with a vehicle 100, such as a frame of vehicle 100.

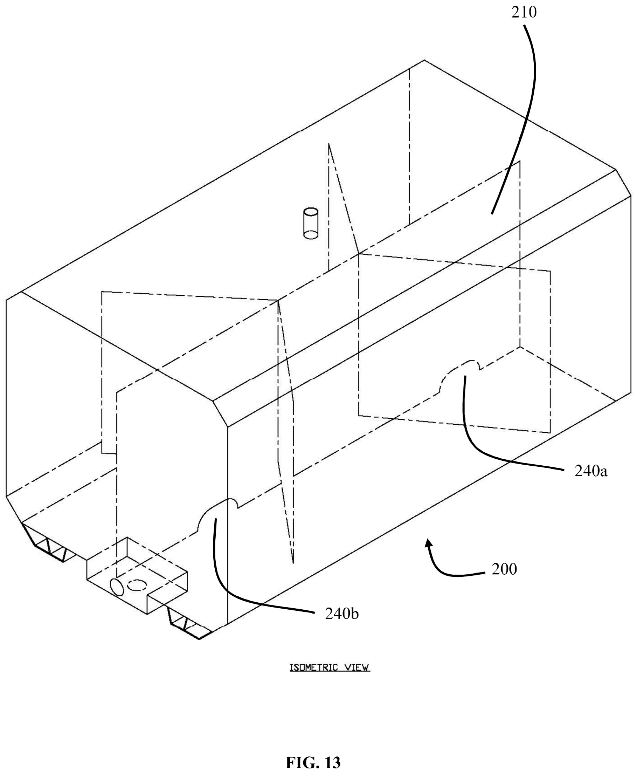

FIG. 13 shows an isometric view of an example tank 200, according to some embodiments. As shown, longitudinal baffle 210 has two indentations or holes 240a and 240b at a bottom surface of longitudinal baffle 210. In some embodiments, a different number of indentations or holes 240 can be present. Indentations or holes 240 can advantageously improve the flow of fluid in tank 200, such as permitting fluid to move through the indentations or holes 240 from one side of longitudinal baffle 210 to the other.

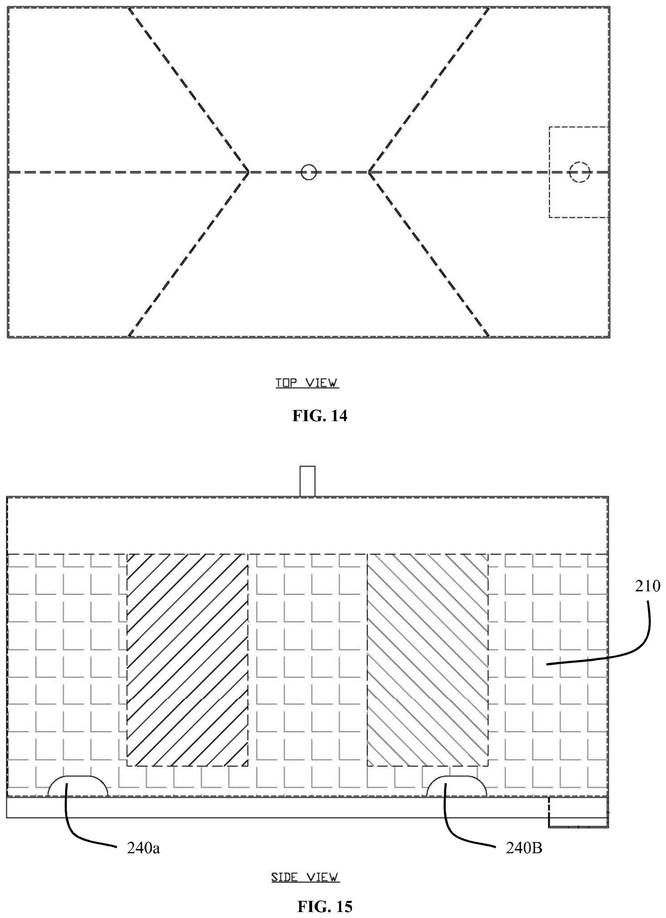

FIG. 14 shows a top of an example tank 200, according to some embodiments. FIG. 15 shows a side view of an example tank 200 in a cross-sectional manner showing longitudinal baffle 210 having indentations or holes 240a and 240b.

### Cannon

In some embodiments, cannon system 400 includes at least one cannon 150. In some embodiments, cannon 150 is mounted on tank 200. Cannon 150 can be positioned or otherwise attached to vehicle 100 at a different location in various embodiments. Cannon 150 is configured to disperse fluid from tank 200. For example, cannon 150 can spray 2,270 L (600 gallons) per minute according to some embodiments. In example embodiments, a full tank 200 can last up to ten minutes covering a distance of about 900 m (depending on dispersion level and speed). Cannon 150 is controllable by controls, such as accessible inside cab 130. An operator can, in real-time, configure the dispersion level, dispersion speed, dispersion type, dispersion direction, and/or other parameters related to dispersion of fluid from tank 200. The operator can perform this control with the aid of video or image feed(s) from one or more cameras positioned to provide visibility around vehicle 100 (in some embodiments, further aided by lights providing increased visibility). Cannon 150 is movable. For example, in some embodiments, cannon 150 is movable (e.g., rotatable) 340° or 365° about an axis. In some embodiments, cannon 150 is configured to disperse fluid between 6 m (20 feet) to 80 m (270 feet) from vehicle 100. In some embodiments, cannon 150 is configured to disperse fluid in a fan spray dispersion type (e.g., mist and shorter distance) and/or jet spray dispersion type (e.g., hard and higher volume, short and long distance). In various embodiments, different angles of direction of dispersion, dispersion types, and/or dispersion distance can be permitted.

### Intake-Output System

In some embodiments, cannon system 400 includes an intake-output system 140. Intake-output system 140 can be positioned at tank 200, for example. In some embodiments, intake-output system 140 is configured to allow fluid to be provided into tank 200. For example, in some embodiments, intake-output system 140 includes one or more pumps configured to pump fluid from a fluid source into tank 200. For example, a four-inch intake necked down to a three-inch pump can be used to fill tank 200 in 6.5 to 8 minutes from an open fluid source, bladder, or tanker truck. The one or more pumps are hydraulic pumps in some embodiments.

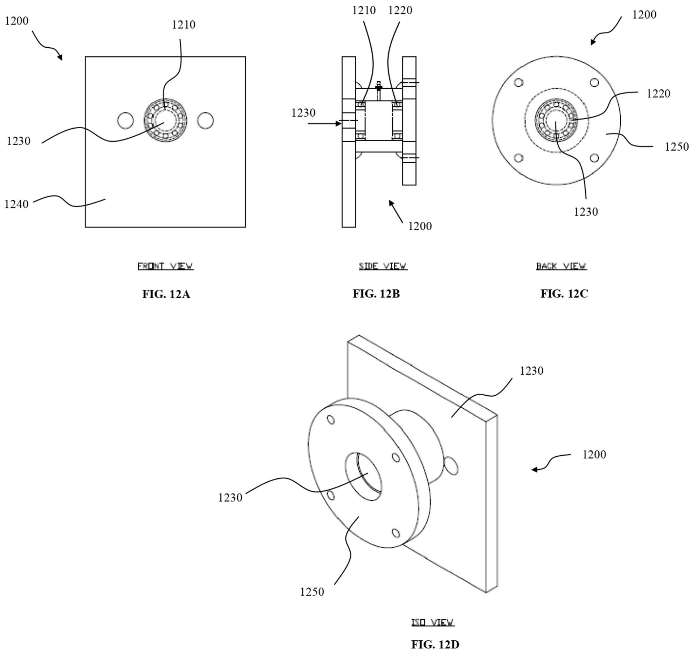

FIG. 12A, 12B, 12C, and 12D show an example pump adapter of a pump of intake-output system 140, according to some embodiments. In some embodiments, the pump adapter can be integral with the pump. In some embodiments, the pump adapter can be a separate adapter attachable to the pump. FIG. 12A shows a front view of a pump adapter 1200. Pump adapter 1200 includes a front plate 1240 in which an arrangement of bearings 1210 are located. The arrangement of bearings 1210 is a circular arrangement in some embodiments such as shown. The arrangement can be configured to support a shaft of a pump. Bearings 1210 are arranged around channel 1230 through which a shaft of a pump can be inserted, according to some embodiments. FIG. 12C shows a back view of pump adapter 1200 showing a back plate 1250 in which an arrangement of bearings 1220 are located. The arrangement of bearings 1220 is a circular arrangement in some embodiments such as shown. The arrangement can be configured to support a shaft of a pump. Bearings 1220 are arranged around channel 1230 through which a shaft of a pump can be inserted, according to some embodiments. FIG. 12B shows a side view of pump adapter 1200 showing front bearings 1210 of front plate 1240 and bearings 1220 of back plate 1250, as well as channel 1230 through which a pump can be inserted and pass through both front plate 1240 and back plate 1250 where supported by bearings 1210 and bearings 1220, respectively. FIG. 12D shows an isometric view of a pump adapter 1200, showing front plate 1230 attached to back plate 1250 through a circular connection that defines channel 1230, according to some embodiments. In some embodiments, bearings 1210 and bearings 1230 are high speed bearings, configured to support rotational movement of a shaft of a pump inserted through channel 1230 at a speed of 5000 RPM.

In some embodiments, a pump includes a configurable throttle valve through which the fluid dispersed from tank 200 is dispersed. The throttle valve can be moved between an open and closed position via a control accessible by an operator in cab 130 (or, in some embodiments, remotely). Other mechanisms for controlling or facilitating operation of the pump can be used in some embodiments.

In some embodiments, the at least one pump is configured to pump fluid into the tank under pressurized conditions. For example, the pump(s) can be selected to provide movement of fluid through under a defined pressure or pressure range.

In some embodiments, a pump is a hydraulic pump. This can advantageously permit cannon system 400 to be used without a gas-powered pumping system, for example. In some embodiments, other types of pumps can be used.

In some embodiments, intake-output system 140 is configured to provide fluid from tank 200 to cannon 150. For example, intake-output system 140 can include at least one pump connectible to at least one cannon 150. This may be a direct or indirect fluid connection. For example, the at least one pump can pump fluid retained in tank 200 to cannon 150, permitting dispersion of the fluid through cannon 150, as controlled by the control(s). In some embodiments, the at least one pump and/or connected suction is hydraulically driven, not gas, so the at least one pump is enabled to turn faster (higher rotations per minute), which produces more suctioning ability. In some embodiments, the at least one pump is configured to disperse fluid from tank 200 at a rate of about 628 gallons per minute and/or fill tank 200 at the same rate. Other rates of dispersion and/or rates of filling of tank 200 can occur according to various embodiments.

In some embodiments, intake-output system 140 is configured to allow fluid to exit tank 200. For example, intake-output system 140 can include at least one pump (which may be the same or a different at least one pump as used to fill tank 200 or as used to provide fluid from tank 200 to cannon 150) configured to pump fluid in tank 200 out of tank 200. For example, a four-inch discharge pump can be included and can fill an 8,325 L (2,200 gallon) bladder in four minutes. Other sizes and rates of pumping can be used according to various embodiments. This can advantageously allow fluid retained in tank 200 to be transferred to a different device at a desired rate, for example.

In some embodiments, at least one pump is connectible to at least one hose. This can be a direct or indirect connection. For example, in some embodiments, one or more (e.g., four) outlets from tank 200 are provided and connectible to fire hoses to allow hand crews to use fluid in tank 200 such as to help extinguish or manage a fire. A pump can be connectible to an outlet or each outlet to facilitate pumping of fluid out of the tank at a desired rate and controllable by a control, such as accessible inside cab 130, according to some embodiments.

In some embodiments, pump(s) configured to provide fluid from a fluid source into tank 200 can also be used to provide fluid from tank 200 to cannon 150 and/or allow fluid retained in tank 200 to exit tank 200 such as into another device. In some embodiments, these pump(s) are suction pump(s) that are only used for filling tank 200 with fluid from a fluid source.

The pump(s) can be connected to the various components described via piping or hoses, for example. For example, a pipe or hose can be used to connect a pump(s) to suction system 300 at a tight connection at an end of suction screen 310. As another example, a pipe or hose can be used to connect a/the pump(s) to cannon 150, and the pump(s) may draw fluid from tank 200 via a pipe or hose before pumping the fluid to or through cannon 150.

Filling time of tank 100 using pump(s) of intake-output system 140 can be reduced by over 50% compared to pumping systems using a gas engine to drive the pumping, according to some embodiments. For example, a gas pumping system may be limited to 3500 RPM, whereas hydraulic pump(s) according to some embodiments disclosed herein can be operated at 5000 RPM.

FIG. 1B shows a rear view of an example cannon system 400, according to some embodiments. FIG. 1C shows an example intake-output system 140, including various pump(s) and interconnection configurations, according to some embodiments. In other embodiments, different configuration(s), interconnection(s), and number(s), size(s), and dimension(s) of components can be used. In some embodiments, intake-output system 140 includes a pumping system as shown that provides for fluid to be pumped from an external source into tank 200, pumped from tank 200 to cannon 150, pumped from an external source to cannon 150, and pumped from tank 200 to an outlet, such as an outlet through which fluid from an external source can be pumped into tank 200.

### Suction System

In some embodiments, cannon system 400 includes a suction system 300. In some embodiments, a suction system 300 includes at least one float 320 positioned above a suction screen 310, the at least one float 320 configured to hold suction screen 310 below an intake fluid level of the fluid source, the suction screen 310 in fluid connection with the at least one pump. Suction system 300 can include a suction screen 310 that comprises an elongated member, such as two feet in length, which can provide an increased volume of water for intake, thereby reducing air intake into intake-output system 400 and the potential for cavitation and collapse of a hose or other piping in intake-output system 400. Existing suction screens may only be four to six inches long, in contrast.

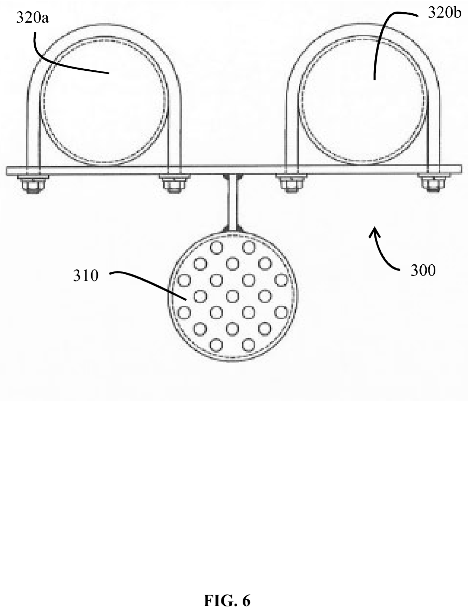

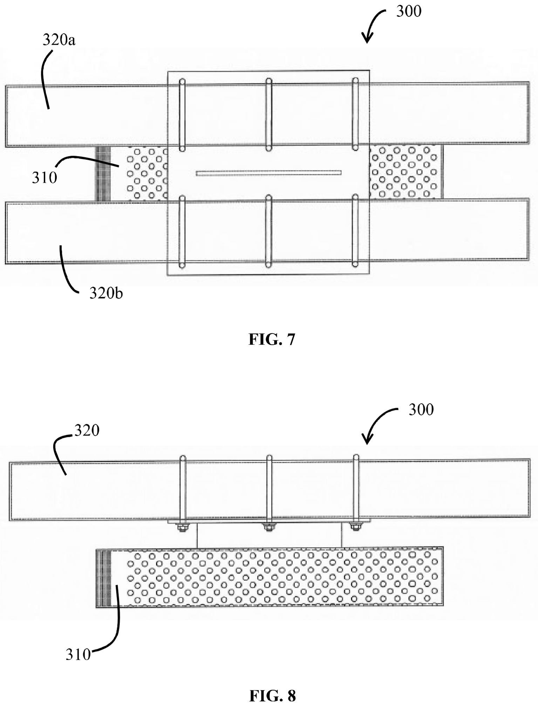

FIG. 6 shows an end view of an example suction system 300, according to some embodiments. In some embodiments, suction system 300 includes two floats 320a and 320b positioned above and each extending on an opposite side of suction screen 310. Each float 320 is attached to a top surface of a frame, and suction screen 310 is attached to a bottom surface of the frame, in some embodiments such as shown in FIG. 6. The attachment of each float 320 to the frame may be facilitated by one or more (e.g., three) chords, straps, bars, or other device configured to facilitate securing the float 320 to the frame such as shown in the top view of an example suction system 300 depicted in FIG. 7. Bolts may be used. In some embodiments, each float 320 is an elongated member equally sized and shaped and each extending past either end of suction screen 310 in directions defined by a longitudinal axis defined by a length of suction screen 310. The distance each float extends past each end may be three inches at each end, for example. In various embodiments, different sizes, distances, dimensions, positioning, shapes, relative orientation, and/or other configuration of each float 320 and suction screen 310 can be used, such as selected to facilitate intake of fluid from a fluid source, positioning of the location of intake in the fluid source (e.g., positioning of suction screen 310 at a depth below an intake fluid level of a fluid source), and/or pumping power, for example. In some embodiments, float(s) 320 hold the intake via suction screen 310 at about six inches below the surface of the fluid source. This can advantageously reduce contaminants at the fluid surface from plugging the suction screen 310, for example. This design is in contrast to systems that hold a suction line at the bottom of a fluid source or that hold an intake hose on the surface which can create air pockets and cause hose collapse.

In some embodiments, suction screen 310 is configured to be long enough with enough perforated surface covered with a fine screen to remove impurities but provide an adequate, continuous water supply to intake-output system 140.

The intention is to maintain the suction at 6" below the water surface, consistently
FIG. 8 shows a side view of an example suction system 300, according to some embodiments. In some embodiments, suction screen 310 is an elongated member defining a channel therethrough, where the suction screen 310 includes holes extending from an exterior surface of the suction screen 310 to an interior surface of the channel. In some embodiments, the holes are positioned at regular intervals in a regular pattern on the entire exterior surface (or entire exposed exterior surface) of suction screen 310, as well as, such as shown in FIG. 6, on a surface covering a first end of suction screen 310. In some embodiments, a second end of suction screen 310 is open and connectible to an intake-output system 400 such as in a tight fit provided by a threaded connection.

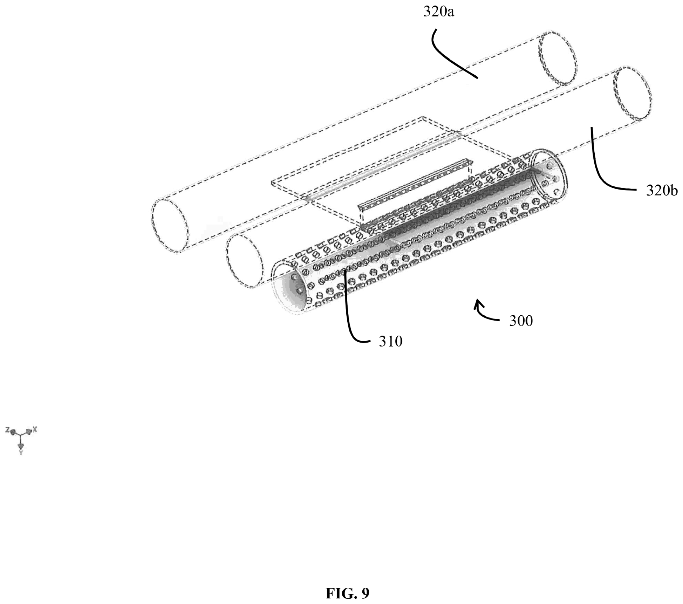

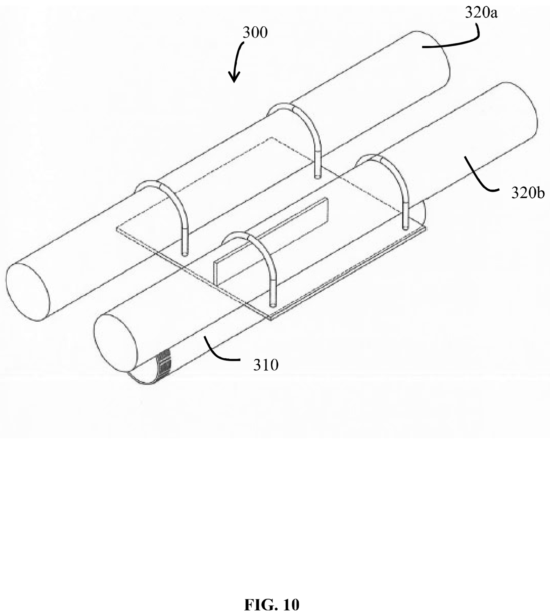

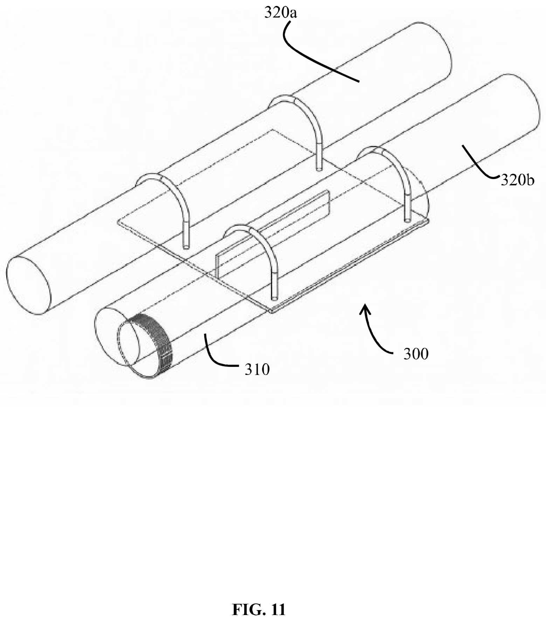

FIGs. 9, 10, and 11 show a perspective view of an example suction system 300 having float 320a and 320b aligned in parallel above and flanking a suction screen 310, according to some embodiments. As shown in FIG. 10 and 11, suction system 300 can be placed at a surface of an fluid source (e.g., an open water source such as a lake) and float 320a and 320b float at a surface of the fluid source such that suction screen 310 is positioned at a depth below the surface.

Suction screen 310 is of a length selected to reduce cavitation in fluid from the fluid source. For example, the length of suction screen 310 can be about two feet, providing an about two feet screened distance. The at least one float 320 is configured to hold suction screen 310 about six inches below a fluid level of the fluid source. One or both features can help reduce air from being suctioned into intake-output system 140 via suction screen 310, for example. Intake of debris into intake-output system 140 via suction screen 310 can also be reduced as suction screen 310 can be positioned below a surface of fluid source.

In some embodiments, suction system 300 is configured for use without the other components of cannon system 400. For example, suction system 300 can be used to intake fluid for connection with a different apparatus or for a different purpose.

To gain a better understanding of embodiments described herein, the following examples are set forth. It will be understood that these examples are intended to describe illustrative embodiments and are not intended to limit the scope of the present disclosure in any way.

### EXAMPLES

### EXAMPLE 1:

In some embodiments, there is provided a water cannon system having a water tank, a cannon, a filling system, and a pumping system defined as follows.

The water cannon system is fitted onto a frame of a vehicle with the functionality of a logging skidder. The skidder is a heavy-duty industrial machine that is typically used for dragging trees to the roadside. The undercarriage is durable and tough with very large tires that give the machine the ability to move quickly through the brush, over steep terrain and with a blade on the front, capable of creating its own access through the forest. The water cannon system is reinforced further and has an extended frame so that the water cannon system can support a large, steel water tank.

The water tank is an innovative design that includes a reinforced shell and baffles placed in a manner that prevents sloshing of water which could cause instability in the machine and maintain traction on all four tires of the vehicle.

The cannon is a water cannon mounted on the top of the tank; it can be operated by an operator of the vehicle to directed the flow of water to any area in a 340° radius. This cannon application is aided by cameras in a cab of the vehicle that allow the operator to fully see the area needing attention, such as with the aid of night vision cameras and lights to help ensure visual clarity.

The filling system of the water cannon system has improved on the pumping ability and suctioning ability so as to reduce filling time of the tank by over 50%, and this same system is used to then pump the water out of the cannon or by hoses that can be attached to the tank for manual operation by operators. A modified suction system is used and allows for pressurized filling of the tank without collapse of the hose which typically occurs under pressure. The pressurized filling can be provided by the suction system, which is configured to reduce cavitation as the intake to suction system is submerged (e.g., six inches) to provide consistent water intake.

The pumping system is run by machine hydraulics not a typical gas-powered system, all controlled by the operator from the safety of the inside of the cab. This system is capable of pumping 628 gallons per minute and can be further deployed to fill such items as portable bladders.

### EXAMPLE 2:

In some embodiments, there is provided a method for providing a cannon, the method including: suctioning fluid at a depth beneath and near a surface of a fluid source; hydraulically pumping the fluid from the fluid source by providing axially rotatable support; retaining pumped fluid; impeding movement of the pumped fluid forward and backward and side to side while retained; and hydraulically dispersing retained pumped fluid. For example, The axially rotatable support can be supplied by bearings installed about a shaft of a pump, for each pump, used for the pumping. Impeding the movement of the pumped fluid can be by installing longitudinal baffle(s) and/or side baffle(s) (e.g., V-shaped) in a water retention tank, for example. The fluid can be pumped into the tank and pumped out of the tank using the same pumping system, in some embodiments.

In some embodiments, the method further includes pressurizing the hydraulic pumping of the fluid. This can be by including a negative pressure system in the tank and/or in the hose, such as using a suction and/or vacuum, for example.

In some embodiments, the suctioning fluid is across an about two feet screened distance. This can be by using an about two-feet long suctioning scree, for example.

In some embodiments, the method further includes providing a video feed covering an about 340° radius. The video feed can be supplied by one or more cameras positioned on the vehicle to capture images or video about the vehicle, for example.

In some embodiments, the method further includes controlling a throttle pressure of the hydraulic dispersion of the retained pumped fluid. This can allow for the amount of water dispersed to be controlled by an operator as desired, for example.

In some embodiments, vehicle 100 including cannon system 400 provides significant benefits over traditional firefighting methods. For example, in some embodiments, vehicle 100 is operable by a crew size of 1, has a tank filling time of about 6.5-8 minutes, uses only a single vehicle and a single person for the initial firefighting attack, has a distance of coverage of about six to about 80 m, can cover about 900 m in about ten minutes, provides about 360° surround lighting to allow for 24 hours per day of operation, and does not require a danger tree assessment as vehicle 100 can push down and help keep the operator safe in its cab. In contrast, traditional methods require a larger crew size of 10-20 people; require at least 45 minutes of tank filling time; require use of road building machines, tanker and pump trucks, and a ground crew for the initial firefighting attack; have a distance of coverage of only 10 m and can only cover up to 300 m per day; are restricted to operation during daylight hours only; and require a danger tree assessment before the initial firefighting crew can initiate the initial attack.

The disclosures of all patents, patent applications, publications and database entries referenced in this specification are hereby specifically incorporated by reference in their entirety to the same extent as if each such individual patent, patent application, publication and database entry were specifically and individually indicated to be incorporated by reference.

Although the present disclosure has made reference to certain specific embodiments, various modifications thereof will be apparent to those skilled in the art. All such modifications as would be apparent to one skilled in the art are intended to be included within the scope of the following claims.

Certain embodiments of the invention are described in the following clauses:
1. A cannon system, comprising:
   a tank comprising at least one baffle extending from an interior surface of the tank;
   at least one pump each comprising bearings supporting a shaft of the pump, the at least one pump configured to pump fluid into the tank from a fluid source and configured to disperse fluid from the tank; and
   a suction system comprising at least one float positioned above a suction screen, the at least one float configured to hold the suction screen below an intake fluid level of the fluid source, the suction screen in fluid connection with the at least one pump.
2. The cannon of clause 1, the at least one baffle comprising a longitudinal baffle extending along a longitudinal axis of the tank and at least two side baffles each extending from the longitudinal baffle towards a side surface of the interior surface of the tank.
3. The cannon of clause 2, the longitudinal baffle extending from a bottom surface of the interior surface of the tank.
4. The cannon of any one of clauses 2 or 3, the at least two side baffles comprising at least two sets of V-shaped baffles.
5. The cannon of any one of clauses 1 to 4, wherein the suction screen comprises a length selected to reduce cavitation in fluid from the fluid source.
6. The cannon of any one of clauses 1 to 5, wherein the suction screen is about two feet long.
7. The cannon of any one of clauses 1 to 6, wherein the at least one float is configured to hold the suction screen about six inches below an intake fluid level of the fluid source.
8. The cannon of any one of clauses 1 to 7, further comprising a configurable throttle valve through which the fluid dispersed from the tank is dispersed.
9. The cannon of any one of clauses 1 to 8, wherein the at least one pump comprises at least one hydraulic pump.
10. The cannon of any one of clauses 1 to 9, wherein the at least one pump is connectible to at least one cannon.
11. The cannon of any one of clauses 1 to 10, wherein the at least one pump is connectible to at least one hose.
12. The cannon of any one of clauses 1 to 11, wherein the at least one pump is configured to pump fluid into the tank under pressurized conditions.
13. The cannon of any one of clauses 1 to 12, wherein the at least one pump is configured to disperse fluid from the tank at a rate of about 628 gallons per minute.
14. A skidder, comprising:
   the cannon system of any one of clauses 1 to 12;
   a cab configured to house at least one control for the configurable throttle valve; and
   at least one camera configured to provide a video feed in the cab, the video feed covering a radius about the cab.
15. A method for providing a cannon, the method comprising:
   suctioning fluid at a depth beneath and near a surface of a fluid source;
   hydraulically pumping the fluid from the fluid source by providing axially rotatable support;
   retaining pumped fluid;
   impeding movement of the pumped fluid forward and backward and side to side while retained; and
   hydraulically dispersing retained pumped fluid.
16. The method of clause 15, further comprising pressurizing the hydraulic pumping of the fluid.
17. The method of clauses 15 or 16, the suctioning fluid is across an about two feet screened distance.
18. The method of any one of clauses 15 to 17, further comprising providing a video feed covering an about 340° radius.
19. The method of any one of clauses 15 to 18, further comprising controlling a throttle pressure of the hydraulic dispersion of the retained pumped fluid.

## Claims

1. A cannon system, comprising:
a tank comprising at least one baffle extending from an interior surface of the tank;
at least one pump each comprising bearings supporting a shaft of the pump, the at least one pump configured to pump fluid into the tank from a fluid source and configured to disperse fluid from the tank; and
a suction system comprising at least one float positioned above a suction screen, the at least one float configured to hold the suction screen below an intake fluid level of the fluid source, the suction screen in fluid connection with the at least one pump.

2. The cannon of claim 1, the at least one baffle comprising a longitudinal baffle extending along a longitudinal axis of the tank and at least two side baffles each extending from the longitudinal baffle towards a side surface of the interior surface of the tank.

3. The cannon of claim 2, the longitudinal baffle extending from a bottom surface of the interior surface of the tank.

4. The cannon of any one of claims 2 or 3, the at least two side baffles comprising at least two sets of V-shaped baffles.

5. The cannon of any one of claims 1 to 4, wherein the suction screen comprises a length selected to reduce cavitation in fluid from the fluid source, and/or wherein the suction screen is about two feet long.

6. The cannon of any one of claims 1 to 5, wherein the at least one float is configured to hold the suction screen about six inches below an intake fluid level of the fluid source, and/or further comprising a configurable throttle valve through which the fluid dispersed from the tank is dispersed.

7. The cannon of any one of claims 1 to 6, wherein the at least one pump comprises at least one hydraulic pump.

8. The cannon of any one of claims 1 to 7, wherein the at least one pump is connectible to at least one cannon.

9. The cannon of any one of claims 1 to 8, wherein the at least one pump is connectible to at least one hose.

10. The cannon of any one of claims 1 to 9, wherein the at least one pump is configured to pump fluid into the tank under pressurized conditions, and/or wherein the at least one pump is configured to disperse fluid from the tank at a rate of about 628 gallons per minute.

11. A skidder, comprising:
the cannon system of any one of claims 1 to 10;
a cab configured to house at least one control for the configurable throttle valve; and
at least one camera configured to provide a video feed in the cab, the video feed covering a radius about the cab.

12. A method for providing a cannon, the method comprising:
suctioning fluid at a depth beneath and near a surface of a fluid source;
hydraulically pumping the fluid from the fluid source by providing axially rotatable support;
retaining pumped fluid;
impeding movement of the pumped fluid forward and backward and side to side while retained; and
hydraulically dispersing retained pumped fluid.

13. The method of claim 12, further comprising pressurizing the hydraulic pumping of the fluid.

14. The method of claims 12 or 13, the suctioning fluid is across an about two feet screened distance.

15. The method of any one of claims 12 to 14, further comprising providing a video feed covering an about 340° radius, and/or further comprising controlling a throttle pressure of the hydraulic dispersion of the retained pumped fluid.
